# EUROPÄISCHE PATENTSCHRIFT

(11) **EP 3 098 009 B1**
(45) Veröffentlichungstag und Bekanntmachung des Hinweises auf die Patenterteilung: **01.11.2017**
(21) Anmeldenummer: 16001206.8
(22) Anmeldetag: 27.05.2016
(51) Int. Cl.: B23D 63/04

(54) **VORRICHTUNG ZUM SCHRÄNKEN DER ZÄHNE EINES SÄGEBLATTS, INSBESONDERE EINES BANDSÄGEBLATTS**
DEVICE FOR SETTING THE TEETH OF A SAW BLADE, IN PARTICULAR A BAND SAW BLADE
DISPOSITIF D'AVOYAGE D'UNE LAME DE SCIE, EN PARTICULIER UNE LAME DE SCIE A RUBAN

(30) Priorität: 29.05.2015 DE 102015007048
(43) Veröffentlichungstag der Anmeldung: 30.11.2016
(73) Patentinhaber: Haas Maschinenbau GmbH, 42855 Remscheid (DE)
(72) Erfinder: HAAS, Hans Robert, D-42853 Remscheid (DE)
(74) Vertreter: Priebisch, Rüdiger

(56) Entgegenhaltungen:
- DE-B3-102014 000 129

## Beschreibung

Die Erfindung betrifft eine Vorrichtung, wie sie in der Präambel des Patentanspruchs 1 definiert ist. Im Einzelnen bezieht sich die Erfindung somit auf eine Vorrichtung zum Schränken der Zähne eines Sägeblatts, insbesondere eines Bandsägeblatts, bei der auf beiden Seiten des Sägeblatts je eine Platte zum Aufnehmen mindestens eines Schränkeisens angeordnet ist, wobei sie Platte beweglich so gelagert ist, dass über den Kopf des Schränkeisens die Schränkkraft auf einen Zahn aufbringbar ist, wobei die Platte eine quer zum Sägeblatt verlaufende Ausnehmung umfasst, in die der Fuß des Schränkeisens eingepasst ist, wobei ferner die Ausnehmung sich in der Platte als im Verhältnis zur Breite der Ausnehmung schmaler Spalt fortsetzt und wobei ferner Spannmittel vorgesehen sind, die durch Aufbringen einer Spannkraft auf die Platte quer zu der Ausnehmung den Fuß fest in der Ausnehmung mit der Platte verspannen.

Derartige Vorrichtungen sind Stand der Technik. Sie machen es möglich, ein Schränkeisen, beispielsweise nach Verschleiß seines Kopfes, schnell und einfach auszuwechseln. Das Schränkeisen wird jedoch im Bereich seines Fußes durch reine Klemmkraft an der Platte gehalten. Bei sehr hoher Schränkkraft ergibt sich auch eine große Kraftkomponente, die versucht, die Klemmkraft zu überwinden und das Schränkeisen nach oben aus der Ausnehmung heraus zu drücken. In solchen Fällen ist es bekannt, von der vorgenannten Klemmung abzurücken und stattdessen das Schränkeisen mit seinem Fuß mit der Platte zu verschweißen. Dann ist das Schränkeisen jedoch nicht mehr so bequem auszuwechseln: In der Regel muss dann das Schränkeisen zusammen mit der Platte ausgetauscht werden, was insbesondere zu einem erhöhten Material- und Arbeitsaufwand führt.

Hohe Schränkkräfte treten insbesondere dann auf, wenn sehr dickes oder hartes Sägenmaterial in Bandform verarbeitet, also geschränkt, werden soll. So gibt es ein spezielles Verfahren, bei dem ein gezahntes und schon gehärtetes Sägeblatt in einem speziellen Arbeitsgang zum fertigen Sägeblatt verarbeitet, sprich geschränkt, wird. Dieses Verfahren ist durch das Deutsche Patent DE 10 2014 000 129 B3 des Erfinders bekannt.

Ausgehend von der vorgenannten Problematik liegt der Erfindung das Bestreben zugrunde, eine Vorrichtung aufzuzeigen, bei der einerseits das Schränkeisen durch Klemmung an der Platte austauschbar befestigt ist, und andererseits auch hohe Schränkkräfte auf die Platte übertragen werden können.

Zur Erreichung dieses Zieles sieht die Erfindung - ausgehend vom genannten Stand der Technik - grundsätzlich vor, dass an der Platte formschlüssige Mittel angeordnet sind, die beim Aufbringen bzw. Aufnehmen der Schränkkraft einer Bewegung des Fußes nach oben aus der Ausnehmung heraus entgegenstehen.

Diese formschlüssigen Mittel tragen - zusätzlich zu den Klemmkräften - dazu bei, dass auch bei extrem hoher Schränkkraft, wie sie beispielsweise bei dem genannten patentierten Verfahren auftreten können, das Schränkeisen weiterhin bequem austauschbar an und in der Platte gehalten wird. Gleichzeitig ist ein andauernd fester und sicherer Halt des Schränkeisens an und in der Platte gewährleistet.

Eine erste Ausbildung der Erfindung sieht vor, dass als formschlüssiges Mittel eine quer über die Ausnehmung und über den Fuß des Schränkeisens verlaufende und an der Platte lösbar befestigte Leiste dient. Diese Ausbildung stellt eine elegant einfache, billige und platzsparende Ausbildung und Anordnung des formschlüssigen Mittels dar.

Diese Leiste kann aus dem selben Material bestehen wie die Platte, z. B. aus Stahl, und zur wiederholten Montage und Demontage insbesondere mit der Platte verschraubt sein.

Die Verschraubung kann darin bestehen, dass zumindest zwei Schrauben die Leiste mit ihrem Schaft durchdringen und in neben der Ausnehmung liegende Innengewinde der Platte eingeschraubt sind.

Eine zweite, alternative Ausbildung der Erfindung sieht vor, dass als formschlüssiges Mittel die Ausnehmung zumindest einen Hinterschnitt aufweist. Bei der ersten Ausbildung ist der Fuß des Schränkeisens in der Ausnehmung zwar prismatisch, nämlich an drei Seiten, aber nur unter Klemmkraft geführt, wobei die Klemmflächen senkrecht und parallel zueinander verlaufen, also keinen Hinterschnitt aufweisen. Entsprechend ist der Fuß geformt. Dort wirkt bei hohen Schränkkräften und Überwindung der Klemmkräfte die Leiste einem Herausgleiten des Fußes entgegen.

Wenn eine erhöhte Schränkkraft aufzunehmen ist, dann wirkt bei der zweiten Ausbildung der Hinterschnitt einem Herausgleiten des Fußes aus der Ausnehmung entgegen: Es tritt gewissermaßen eine Verkantung des Fußes in der Ausnehmung ein. Bei dieser formschlüssigen Anordnung von Ausnehmung und Fuß spielen die Klemmkräfte nahezu nur noch eine untergeordnete Rolle.

Grundsätzlich genügt ein Hinterschnitt der Ausnehmung und des Fußes. Im einfachsten Falle ist der Hinterschnitt, die Ausnehmung, somit asymmetrisch ausgebildet. Es können jedoch auch zwei Hinterschnitte vorgesehen werden, so dass der Hinterschnitt, die Ausnehmung, symmetrisch ausgebildet ist, also die Ausnehmung zwei gleiche Hinterschnitte umfasst.

Eine besonders wirksame Kraftaufnahme zwischen Platte und Schränkeisen sowie eine hohe Montagefreundlichkeit und -sicherheit werden erzielt durch eine Kombination der Merkmale der ersten mit der zweiten Ausführung.

Bei allen Ausführungen der Erfindung kann insbesondere die Montagefreundlichkeit dadurch erhöht werden, dass als Spannmittel eine einzige quer zum Spalt und zur Ausnehmung verlaufende Schraube dient, die mit einem Innengewinde der Platte zusammenwirkt. Diese Montageform gewinnt noch mehr an Bedeutung, wenn zumindest zwei Schränkeisen parallel nebeneinander mit ihren Füßen in entsprechenden Ausnehmungen eingepasst und eingespannt sind. Eine solche Anordnung, insbesondere in Form eines langen, mit einem Kopf versehenen Schraubenbolzens, wird beispielsweise dann gewählt, wenn gleichzeitig zwei oder mehrere Zähne geschränkt werden sollen, wobei die Schränkung identisch oder auch unterschiedlich sein kann.

In der Zeichnung sind Ausführungsbeispiele der Erfindung dargestellt, die nun näher beschrieben werden.
Fig. 1 zeigt eine erste Vorrichtung, bei der auf beiden Seiten eines gezahnten Sägeblatts je eine Platte angeordnet ist, die je drei Schränkeisen umfassen und die zum Schränken der Zähne in Richtung X1 und X2 auf das Sägeblatt zugeführt werden können. Die rechte Platte ist ohne Leiste, nur mit Schränkeisen, dargestellt.
Fig. 2 zeigt im Prinzip eine Draufsicht auf die Vorrichtung nach Fig. 1, wobei bei der linken Hälfte die Schränkeisen und eine Leiste montiert sind, während hingegen bei der rechten Hälfte Platte, Schränkeisen und Leiste separat dargestellt sind.
Fig. 3 zeigt eine zweite Vorrichtung, entsprechend der Fig. 1 angeordnet.
Fig. 4 zeigt eine Draufsicht auf die Vorrichtung nach Fig. 3, der Fig. 2 entsprechend.
Fig. 5 zeigt eine Prinzipdarstellung des Kräfteverlaufs beim Schränken eines Sägezahnes mit einer der beiden Vorrichtungen.

Da Schränkungsvorrichtungen, also Vorrichtungen zum Schränken der Zähne eines Sägeblatts, in unterschiedlichen Formen vorbekannt sind, beschränkt sich die Darstellung auf die wesentlichen Unterschiede zum Stand der Technik.

Die Vorrichtung 1 besteht vorzugsweise aus einem Stahl und umfasst eine nicht dargestellten Klemmvorrichtung, mittels der ein flaches, mit Sägezähnen 2 versehenes Sägeblatt 3 zum Schränken eingespannt werden kann. Beidseitig des - hier schon mit geschränkten Sägezähnen 2 dargestellten - Sägeblatts 3 ist je eine Platte 4 in die Richtungen X1 und X2 beweglich gelagert. Antrieb, Führungen und dergleichen der Platten 4 sind nicht dargestellt. Jede Platte 4 umfasst drei quer zum Sägeblatt 3 verlaufende Ausnehmungen 5, die sich in der Platte 4 als sehr schmale Spalte 6 von wenigen Zehntelmillimeter Breite fortsetzen und nach einer Abwinkelung 7 in Richtung des Sägeblatts 2 als Sackschlitze enden.

In die Ausnehmungen 5 sind Schränkeisen 8 eingepasst. Hierbei ist jedes Schränkeisen 8, zumindest sein Fuß 9, mit äußeren, senkrechten und parallelen Klemmflächen 10 in jede Ausnehmung 5 mit inneren, senkrechten und parallelen Klemmflächen 11 eng eingepasst.

Quer zu den Ausnehmungen 5 und im Bereich der sich daran anschließenden Abschnitte der Spalten 6 ist in jede Platte 4 eine durchgehende Bohrung 12 eingebracht, die an einem Endabschnitt mit einem Innengewinde 13 versehen ist.

Durch die Bohrung 12 erstreckt sich eine Schraube 14, mit deren Hilfe, nämlich zwischen dem Schraubenkopf 15 und dem Innengewinde 13, die Platte 4 im Bereich der Ausnehmungen 5 und der Spalte 6 verspannbar ist. Durch die Verspannung werden die Spalte 6 und die Ausnehmungen 5 verengt. Hierdurch wird zwischen den äußeren Klemmflächen 10 an jedem Fuß 9 und den inneren Klemmflächen 11 jeder Ausnehmung 5 eine Spannkraft aufgebaut, die einen hohen Reibungsschluss zwischen jedem Fuß 9 und jeder Ausnehmung 5 erzeugt. Mit einer Schraube 14 werden also gleichzeitig drei Schränkeisen 8 an jeder Platte 4 lösbar befestigt.

Zusätzlich zum beschriebenen Reibungschluss zwischen den Klemmflächen 10 und 11 wird ein Formschluss erzeugt. Hierzu ist in jeder Platte 4 beiderseits der Füße 9 der Schränkeisen 8 je eine senkrechte Gewindebohrung 16 eingebracht. Über den Bereich der Füße 9 und der Gewindebohrungen 16 der Platte 4 ist eine Leiste 17 gelegt, die im Bereich der Gewindebohrungen 16 zwei Bohrungen 18 aufweist. Zwei Schrauben 19 durchdringen mit ihren Schäften die Bohrungen 18 mit Spiel und verspannen die Leiste 17 mit der Platte 4: Eine zusätzliche, formschlüssige Sperre gegen Heraustreten aller Füße 9 nach oben ist hergestellt.

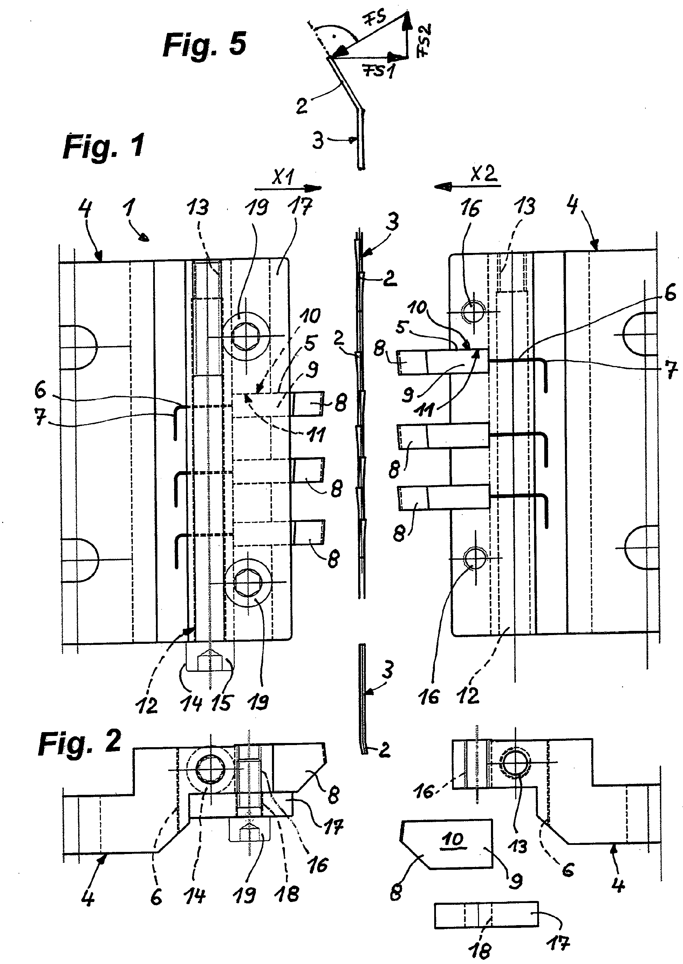

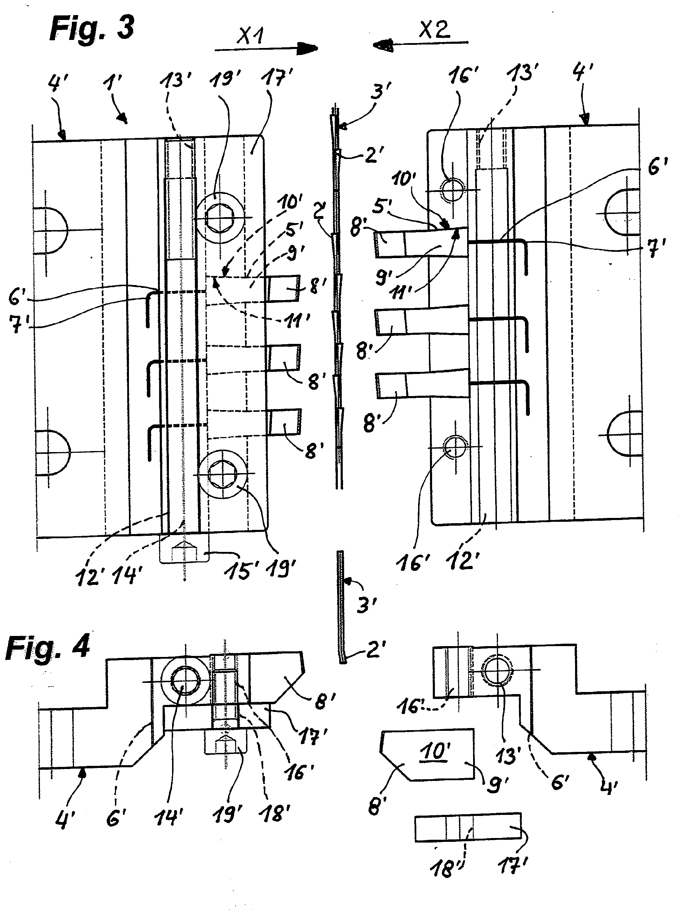

Fig. 3 und 4 zeigen eine zweite Vorrichtung, die entsprechend der Fig. 1 und 2 angeordnet ist. Gleiche Bauteile sind mit gleichem Bezugszeichen, aber mit einem Index, versehen.

Der wesentliche Unterschied zur ersten Vorrichtung liegt in der Ausbildung der Klemmflächen 10' und 11' zwischen dem Fuß 9' des Schränkeisens 8' und der diesen nach Art einer Passung aufnehmenden Ausnehmung 5'.

Hier hat die Ausnehmung 5' einen symmetrischen Hinterschnitt, in den ein entsprechend geformter Fuß 9' eingeklemmt wird. Der Fuß 9' ist also hier nicht nur auf drei Seiten begrenzt und in U-Form eingeklemmt, wobei die U-Schenkel als Klemmflächen 10' und 11' und Reibungsflächen wirken. Durch den Hinterschnitt, also durch die nicht mehr parallelen Anordnung der zusammenwirkenden senkrechten Klemmflächen 10' und 11', wird nicht nur eine auf Reibung bewirkende Verspannung und Verklemmung der Bauteile 4' und 9' bzw. 8' bewirkt. Vielmehr wird auch bewirkt, dass die nicht parallelen Klemmflächen 10' und 11' der U-Schenkel sich einer Trennung widersetzen, wenn eine erhöhte Schränkkraft aufzunehmen ist: Sie stehen durch ihre schwalbenschwanzartige Formgebung und Anordnung, nämlich in einem Winkel ≠ 90 Grad zur Bandrichtung, und damit nicht mehr als Reibungsflächen zur Verfügung. Der Fuß 9' verkantet sich in der Ausnehmung 5' an den drei Seiten des Hinterschnitts, wodurch ein bloßes Herausgleiten des Fußes 9' aus der Ausnehmung 5' nicht mehr möglich ist.

In Fig. 5 ist der Kräfteverlauf am Kopf eines Schränkeisens 8 prinzipiell dargestellt. Am geschränkten Sägezahn 2 greift die Schränkkraft FS senkrecht zum Sägezahn 2 an. Die auf das Schränkeisen 8 einwirkenden Kräfte bestehen aus einer waagerechten Komponente FS1 und einer senkrechten Komponente FS2. Während die waagerechte Komponente FS1 den Fuß 9 des Schränkeisens 8 noch mehr in die Ausnehmung 5 hinein drückt, drückt die Komponente FS2 das Schränkeisen 8 nach oben, aus der Ausnehmung 8 heraus.

Die erste Ausführung der Erfindung, mit der Leiste 17, wirkt der Komponente FS2 entgegen, indem die Leiste 17 für den Fuß 9 des Schränkeisens 8 als formschlüssiger Anschlag dient. Bei der zweiten Ausführung der Erfindung, mit dem Hinterschnitt, führen beide Komponenten FS1 und FS2 zu einer Verkantung des Fußes 9' des Schränkeisens 8' in der hinterschnittenen Ausnehmung 5'. Beide Ausführungen zusammen ergänzen sich in ihrer Wirkung.

Bei der zweiten Ausführung, nur mit Hinterschnitt, lässt sich das Schränkeisen 8' wie bisher in der Höhe stufenlos und einfach verstellen, insbesondere zum Ausgleich eines unvermeidbaren Verschleißes am Kopf des Schränkeisens 8'.

### Bezugszeichen

- 1, 1': Vorrichtung
- 2, 2': Sägezahn
- 3.3': Sägeblatt
- 4.4': Platte
- 5, 5': Ausnehmung
- 6, 6': Spalt
- 7, 7': Abwinkelung
- 8, 8': Schränkeisen
- 9, 9': Fuß
- 10, 10': Klemmfläche, äußere
- 11, 11': Klemmfläche, innere
- 12, 12': Bohrung
- 13, 13': Innengewinde
- 14, 14': Schraube
- 15, 15': Schraubenkopf
- 16, 16': Gewindebohrung
- 17, 17': Leiste
- 18, 18': Bohrung
- 19, 19': Schraube
- X1: Schränkrichtung
- X2: Schränkrichtung
- FS: Schränkkraft
- FS1: waagerechte Komponente von FS
- FS2: senkrechte Komponente von FS

## Patentansprüche

1. Vorrichtung (1; 1') zum Schränken der Zähne (2; 2') eines Sägeblatts (3; 3'), insbesondere eines Bandsägeblatts, bei der auf beiden Seiten des Sägeblatts (3; 3') je eine Platte (4; 4') zum Aufnehmen mindestens eines Schränkeisens (8; 8') angeordnet ist,
- wobei die Platte (4; 4') beweglich so gelagert ist, dass über den Kopf des Schränkeisens (8; 8') die Schränkkraft (FS) auf einen Zahn (2; 2') aufbringbar ist,
- wobei die Platte (4; 4') eine quer zum Sägeblatt (3; 3') verlaufende Ausnehmung (5; 5') umfasst, in die der Fuß (9; 9') des Schränkeisens (8; 8') eingepasst ist,
- wobei ferner die Ausnehmung (5; 5') sich in der Platte (4; 4') als im Verhältnis zur Breite der Ausnehmung (5; 5') schmaler Spalt (6; 6') fortsetzt,
- und wobei ferner Spannmittel (14; 14') vorgesehen sind, die durch Aufbringen einer Spannkraft auf die Platte (4; 4') quer zu der Ausnehmung (5; 5') den Fuß (9; 9') fest in der Ausnehmung (5; 5') mit der Platte (4; 4') verspannen,
**dadurch gekennzeichnet, dass** an der Platte (4; 4') formschlüssige Mittel (17; 10', 11') angeordnet sind, die beim Aufbringen bzw. Aufnehmen der Schränkkraft (FS) einer Bewegung des Fußes (9; 9') nach oben aus der Ausnehmung (5; 5') heraus entgegenstehen.

2. Vorrichtung (1; 1') nach Anspruch 1, **dadurch gekennzeichnet, dass** als formschlüssiges Mittel eine quer über die Ausnehmung (5; 5') und über den Fuß (9; 9') des Schränkeisens (8; 8') verlaufende und an der Platte (4; 4') lösbar befestigte Leiste (17; 17') dient.

3. Vorrichtung (1; 1') nach Anspruch 2, **dadurch gekennzeichnet, dass** die Leiste (17; 17') mit der Platte (4; 4') verschraubt ist.

4. Vorrichtung (1; 1') nach Anspruch 3, **dadurch gekennzeichnet, dass** zumindest zwei Schrauben (19; 19') die Leiste (17; 17') mit ihrem Schaft durchdringen und in neben der Ausnehmung (5; 5') liegende Innengewinde (16; 16') der Platte (4; 4') eingeschraubt sind.

5. Vorrichtung (1') nach Anspruch 1, **dadurch gekennzeichnet, dass** als formschlüssiges Mittel die Ausnehmung (5') einen Hinterschnitt (10', 11') aufweist.

6. Vorrichtung (1') nach Anspruch 5, **dadurch gekennzeichnet, dass** der Hinterschnitt (10', 11') symmetrisch ausgebildet ist.

7. Vorrichtung nach Anspruch 5, **dadurch gekennzeichnet, dass** der Hinterschnitt asymmetrisch ausgebildet ist.

8. Vorrichtung (1; 1') nach Anspruch 1, **gekennzeichnet durch** eine Kombination der Merkmale eines der Ansprüche 2 bis 4 mit den Merkmalen eines der Ansprüche 5 bis 7.

9. Vorrichtung (1; 1') nach einem der Ansprüche 1 bis 8, **dadurch gekennzeichnet, dass** als Spannmittel (14, 13; 14', 13) eine einzige quer zum Spalt (6; 6') und zur Ausnehmung (5; 5') verlaufende Schraube (14; 14') dient, die mit einem Innengewinde (13; 13') der Platte (4; 4') zusammenwirkt.

10. Vorrichtung (1; 1') nach einem der Ansprüche 1 bis 9, **dadurch gekennzeichnet, dass** zumindest zwei Schränkeisen (8; 8') parallel nebeneinander mit ihren Füßen (9; 9') in entsprechenden Ausnehmungen (5; 5') eingepasst und eingespannt sind.

## Claims

1. Device (1; 1') for setting the teeth (2; 2') of a saw blade (3; 3'), in particular of a band saw blade, in which a respective plate (4; 4') for receiving at least one saw set (8; 8') is arranged on each of the two sides of the saw blade (3; 3'),
- wherein the plate (4; 4') is mounted in a movable manner such that the setting force (FS) is able to be applied to a tooth (2; 2') via the head of the saw set (8; 8'),
- wherein the plate (4; 4') comprises a recess (5; 5') which extends transversely to the saw blade (3; 3') and into which the foot (9; 9') of the saw set (8; 8') is fitted,
- wherein the recess (5; 5') furthermore continues in the plate (4; 4') as a gap (6; 6') that is narrow compared with the width of the recess (5; 5'),
- and wherein clamping means (14; 14') are furthermore provided, which, by applying a clamping force to the plate (4; 4') transversely to the recess (5; 5'), firmly brace the foot (9; 9') in the recess (5; 5') with the plate (4; 4'),
**characterized in that** form-fitting means (17; 10', 11') are arranged on the plate (4; 4'), which, when the setting force (FS) is applied or received, counteract any movement of the foot (9; 9') upwards out of the recess (5; 5').

2. Device (1; 1') according to claim 1, **characterized in that** a strip (17; 17') that extends transversely over the recess (5; 5') and over the foot (9; 9') of the saw set (8; 8') and is releasably fastened to the plate (4; 4') serves as form-fitting means.

3. Device (1; 1') according to claim 2, **characterized in that** the strip (17; 17') is screwed to the plate (4; 4').

4. Device (1; 1') according to claim 3, **characterized in that** at least two screws (19; 19') pass through the strip (17; 17') with their shank and are screwed into internal threads (16; 16'), located next to the recess (5; 5'), in the plate (4; 4').

5. Device (1') according to claim 1, **characterized in that** the recess (5') has an undercut (10', 11') as form-fitting means.

6. Device (1') according to claim 5, **characterized in that** the undercut (10', 11') is formed in a symmetrical manner.

7. Device according to claim 5, **characterized in that** the undercut is formed in an asymmetrical manner.

8. Device (1; 1') according to claim 1, **characterized by** a combination of the features in one of claims 2 to 4 with the features of one of claims 5 to 7.

9. Device (1; 1') according to one of claims 1 to 8, **characterized in that** a single screw (14; 14') extending transversely to the gap (6; 6') and to the recess (5; 5') serves as clamping means (14, 13; 14', 13'), said screw (14; 14') engaging with an internal thread (13; 13') of the plate (4; 4').

10. Device (1; 1') according to one of claims 1 to 9, **characterized in that** at least two saw sets (8; 8') are fitted, parallel to and alongside one another, with their feet (9; 9') in corresponding recesses (5; 5') and are clamped in place.

## Revendications

1. Dispositif (1; 1') pour incliner les dents (2; 2') d'une lame de scie (3; 3'), en particulier d'une lame de scie à bande, dans lequel une plaque (4; 4') de reprise d'au moins un fer d'inclinaison (8; 8') est disposée sur chacun des deux côtés de la lame de scie (3; 3'),
la plaque (4; 4') étant montée à déplacement de telle sorte que la force d'inclinaison (FS) puisse être appliquée sur une dent (2; 2') par l'intermédiaire de la tête du fer d'inclinaison (8; 8'),
la plaque (4; 4') comportant une découpe (5; 5') qui s'étend transversalement par rapport à la lame de scie (3; 3') et dans laquelle le pied (9; 9') du fer d'inclinaison (8; 8') est inséré,
la découpe (5; 5') se prolongeant en outre dans la plaque (4; 4') plus loin que l'interstice (6; 6') plus étroit que la largeur de la découpe (5; 5'),
des moyens de serrage (14; 14') qui serrent le pied (9; 9') avec la plaque (4; 4') solidairement dans la découpe (5; 5') transversalement par rapport à la découpe (5; 5') par application d'une force de serrage sur la plaque (4; 4') étant en outre prévus, **caractérisé en ce que**
des moyens (17; 10', 11') qui s'opposent à un déplacement du pied (9; 9') vers le haut et hors de la découpe (5; 5') lors de l'application de la force d'inclinaison (FS) sont disposés dans la plaque (4; 4') en correspondance géométrique.

2. Dispositif (1; 1') selon la revendication 1, **caractérisé en ce qu'**il utilise comme moyen en correspondance géométrique une latte (17; 17') fixée de manière libérable sur la plaque (4; 4') et s'étendant transversalement au-dessus de la découpe (5; 5') et au-dessus du pied (9; 9') du fer d'inclinaison (8; 8').

3. Dispositif (1; 1') selon la revendication 2, **caractérisé en ce que** la latte (17; 17') est vissée sur la plaque (4; 4').

4. Dispositif (1; 1') selon la revendication 3, **caractérisé en ce qu'**au moins deux vis (19; 19') traversent la latte (17; 17') par leur tige et sont vissées dans des filets intérieurs (16; 16') de la plaque (4; 4') situés à côté de la découpe (5; 5').

5. Dispositif (1') selon la revendication 1, **caractérisé en ce que** comme moyen en correspondance géométrique, la découpe (5') présente une contre-dépouille (10', 11').

6. Dispositif (1') selon la revendication 5, **caractérisé en ce que** la contre-dépouille (10', 11') a une forme symétrique.

7. Dispositif selon la revendication 5, **caractérisé en ce que** la contre-dépouille a une configuration asymétrique.

8. Dispositif (1') selon la revendication 1, **caractérisé par** une combinaison des caractéristiques de l'une des revendications 2 à 4 avec les caractéristiques de l'une des revendications 5 à 7.

9. Dispositif (1; 1') selon l'une des revendications 1 à 8, **caractérisé en ce que** comme moyen de serrage (14, 13; 14', 13'), il présente une seule vis (14; 14') qui s'étend transversalement par rapport à l'interstice (6; 6') et par rapport à la découpe (5; 5') et qui coopère avec un filet intérieur (13; 13') de la plaque (4; 4').

10. Dispositif (1; 1') selon l'une des revendications 1 à 9, **caractérisé en ce qu'**au moins deux fers d'inclinaison (8; 8') sont insérés l'un à côté de l'autre avec leur pied (9; 9') dans une découpe (5; 5') correspondante et sont serrés.
